Europäisches Patentamt

(19) European Patent Office

Office européen des brevets

(11) Numéro de publication: **0 089 250**
**A1**

(12) **DEMANDE DE BREVET EUROPEEN**

(21) Numéro de dépôt: **83400250.3**

(22) Date de dépôt: **04.02.83**

(51) Int. Cl.³: **G 06 F 3/16**
**G 06 F 15/20**

(30) Priorité: **11.02.82 FR 8202246**

(43) Date de publication de la demande:
**21.09.83 Bulletin 83/38**

(84) Etats contractants désignés:
**AT BE CH DE GB IT LI LU NL SE**

(71) Demandeur: **Ghione, Christian Jean Paul**
**70 Rue Dr. Pouillot**
**F-77000 Melun(FR)**

(72) Inventeur: **Ghione, Christian Jean Paul**
**70 Rue Dr. Pouillot**
**F-77000 Melun(FR)**

(54) **Terminal autonome de traitement de données et de textes informatiques, écrits et oraux.**

㊾ L'invention concerne un micro-système possédant un fonctionnement informatique autonome à très haut pouvoir de communication directe avec l'utilisateur ou un autre système informatique, possèdant notamment:

Une mémoire sur bande de très grande capacité par exemple, (15) 90 minutes de musique CONTINUE stéréophonique, 180 en mono ou encore 4 MILLONS d'octets à raison de 3 minutes de lecture par face.

Un système de traduction universel (4) lui permettant de traduire tous les codes immaginables, en langues humaines écrites quelconques (Chinois or Arabe par exemple), en code informatique, ou graphique en n'importe quelle autre forme, orale en voix naturelle haute fidélité grâce à la mémoire sur bande (15) localement ou à distance par le téléphone (14), écrite grâce à l'imprimante graphique (3), informatique parallèle (16), série (10) ou rapide en visuel (2).

Une zone de mémoire figée entièrement programmable (6) avec tous les types classiques de mémoire (EPROMS, ou autres) directement utilisable par l'appareil en lecture avec une écriture protégée mécaniquement.

Une liaison directe générale de surveillance et de communication synchrone sur le secteur de distribution alternatif (8) alimentant l'appareil (EDF par exemple).

FIGURE 2

EP 0 089 250 A1

0089250

Dans l'état de la technique actuelle, tous les systèmes informatiques utilisant les langages évolués nécessitent un terminal vidéo volumineux et lourd, avec un clavier plus ou moins spécialisé, un ou plusieurs spécialistes connaissant bien le langage et les programmes utilisés par le système, un choix très limité de mémoire de masse soit sur mini-disquette nécessitant un lecteur spécial et coûteux (mais très rapide quelques millisecondes), soit sur mini-cassettes standards très économiques mais en pratique inutilisables à cause du temps de lecture (plusieurs dizaines de minutes par face), soit encore en mémoire programmable du genre E.P.R.O.M dont la programmation ne peut se faire que par l'intermédiaire de périphériques spécialisés (un seul type de mémoire possible par option) peu maniables et coûteux, en plus la communication machine vers opérateur se fait presque uniquement en visuel (écrans vidéo, imprimantes, afficheurs...) sauf de très rares essais de reconstitution artificielle de la parole.

La présente invention a été réalisée pour résoudre ces principaux inconvénients grâce à l'emploi d'un clavier graphique rendant l'invention accessible à tous sans connaissance particulière en informatique (même à de jeunes enfants pour leur apprendre à lire et à écrire!) permettant au système de comprendre aussi bien une phrase qu'un dessin (rond, carré, triangle, caractères étrangers comme le Chinois, le Japonais, ou l'Arabe !), avec une communication machine/opérateur très particulière utilisant un magnétophone spécialisé à commandes entièrement électroniques (lecture lente et rapide dans les deux sens, lecture des deux faces simultanées ou consécutives etc...), et/un système de contrôle à distance utilisant directement le secteur électrique d'alimentation alternatif comme support de transmission (réseau E.D.F par exemple).

**0089250**

Le programmateur universel autonome objet de la présente invention est composé comme indiqué par les figures (I) et (2), la figure (I) représentant le diagramme de principe, et la figure (2) des exemples de réalisation globale de l'appareil.

Ce programmateur est composé par :

Un boitier unique (I) de petites dimensions, renfermant tous les dispositifs mécaniques, électriques, et électroniques nécessaires au fonctionnement autonome du programmateur, une source d'énergie (8) externe ou interne restant obligatoire.

Un ordinateur miniature ou microprocesseur (I2) avec sa mémoire de programmes (I3) chargé de toute la gestion du programmateur universel autonome et de ses circuits d'interface avec l'extérieur.

Deux types de visualisations disponibles simultanément sur le programmateur, l'une rapide (2) composée d'un afficheur de capacité limité en caractères (à plasma, fluorescent, à cristaux liquides ou à diodes lumineuses), l'autre étant composée par une imprimante (3) capable d'écrire et de dessiner sur une bande de papier, plastique ou aluminium fournissant ainsi directement tous les résultats utiles à l'opérateur sous une forme claire et durable (pour un stockage éventuel) difficilement destructible même en cas de destruction électrique du programmateur (ou mécanique sans flammes) sous forme de courbes, de tableaux, ou en écriture "normale" qui sera détaillée par la suite.

Un clavier à double utilisation permets grâce à un interface électronique spécial (4,5) de commander le programmateur universel en écriture directe dans la langue du pays de commercialisation (Francais, Anglais, Allemand, Espagnol, Portugais, Russe, Grec, Arabe, Chinois, Japonais et leurs dérivés) ou bien directement en mode graphique, chaque "DESSIN" correspondant à un appel de programme prédéterminé. Ce clavier graphique sera détaillé dans la suite de la présentation.

0089250

Une zone de mémoire programmable (6) accessible physiquement en face avant du boitier (I), sous le capot de protection (II) la protègeant de la poussière et des objets métalliques, comportant tous les supports nécessaires à la programmation directe des diverses mémoires utilisables par le programmateur sous forme de circuits intégrés, de support magnétique, cartonné, ou optique (comme les disques laser par exemple).

Toutes les commandes de cette zone étant du seul domaine du microprocesseur (I2), pour des raisons de sécurité, la programmation de chaque support de mémoire est conditionnée par un interrupteur mécanique (donc très fiable) situé en face avant du boitier (I) juste à coté du support qu'il protège (pour éviter les confusions possibles), l'ouverture de cet interrupteur isolant le signal principal de programmation du support et évite ainsi d'en modifier le contenu accidentellement.

Une mémoire vive (7) (volatile ou non suivant le type de mémoire utilisée) protègée en écriture accessible que par l'intermédiaire du clavier (4) et du microprocesseur (I2), dont la principale caractèristique est de pouvoir être totalement interdite à l'écriture (à partir du clavier comme du microprocesseur) grâce à un interrupteur en face avant, sans jamais perdre son accèssibilité instantanée en lecture, permettant la mise au point très facile de programmes longs et complexes sans passer par des mémoires non volatiles généralement très longues à corriger (30 minutes pour une EPROM par exemple, quelques millisecondes pour une disquette contre quelques microsecondes pour une mémoire vive!).

Les zones mémoires (6) et (7) étant directement utilisables par le microprocesseur constituent des parties essentielles du programmateur universel autonome.

Un interface de communication série à grande vitesse (IO) permettant au programmateur de communiquer sur des fils indépendants (standard R.S 232 par exemple) en mode synchrone ou assynchrone, avec ou sans contrôle de parité, quelque soit la vitesse imposée par le périphérique

0089250

que l'on pourrait lui adjoindre pour augmenter ses capacités de base déjà importantes (tant que cette vitesse reste inférieure à la limite maximum du programmateur). Le principe de l'auto-réglage en vitesse est de déterminer automatiquement, sans aide ni réglage manuel, la vitesse de transmission, la présence ou non de la parité, la base de référence (mode synchrone ou assynchrone), la longueur du code utilisé (de 5 à 8 bits + la parité (?) + les bits de stop par exemple) en recherchant le code d'initialisation de la plupart des systèmes( le "RETOUR CHARIOT" d'une machine à écrire, par exemple) par comparaisons successives du code émis par le périphérique et ceux possibles, ce qui se traduirait avec une machine à écrire par appuyer sur la barre d'espacement jusqu'à ce que le chariot bouge effectivement.

Un interface d'adaptation avec le téléphone permets de communiquer à très longue distance avec le programmateur, par exemple entre le client au Japon et le frabricant en France pour déterminer l'importance d'une panne et le moyen de la réparer, sans avoir à se déplacer et en quelques minutes. Cet interface (I4) possèdant son propre microprocesseur indépendant du système principal, avec sa mémoire autonome pouvant remplacer une partie de l'électronique en cas de panne, ce remplacement pouvant être automatique ou manuel.

Un interface d'entrées-sorties locales (I6) permets au programmateur une surveillance et des commandes possibles, capteurs d'une machine outil avec la commande des différents moteurs par exemple, avec des interfaces de puissance extérieurs pour la sécurité de l'appareil .

Un interface de communication directe par la parole(I5) permettant au programmateur universel autonome de "PARLER" sans reconstituer la parole grâce à un magnétophone évolué, (dont la description sera faite dans la suite de la présentation), à l'aide de messages pré-enregistrés sur un support adapté (magnétique plus économique, ou optique plus rapide mais beaucoup plus coûteux) chacun étant numéroté par son équivalent en langage informatique sur l'une des pistes, lisible à très grande vitesse par le microprocesseur (I2) (jusqu'à 30 fois la vitesse normale pour une mini-cassette magnétique standard!).

Les commandes du magnétophone évolué étant entièrement électroniques permettent une véritable communication avec l'utilisateur en direct grace à un haut-parleur (ou un petit écouteur auriculaire) aussi bien qu'à distance par l'intermédiaire de l'interface téléphonique (I4).

Grâce à l'emploi de deux magnétophones évolués (I5) et de leurs interfaces de commande et de gestion il est alors possible au programmateur universel autonome de construire un véritable discours oral SANS RECONSTITUTION artificielle de la parole humaine, l'un des magnétophones servant de dictionnaire (mot à mot ou phrase élémentaire), l'autre de support de reconstitution qu'il suffira de lire d'une façon continue. Dans l'exemple analysé plus loin nous avons choisi de présenter la version économique utilisant des mini-cassettes magnétiques standards, la version beaucoup plus rapide sur disque optique à lecture laser ayant le même principe que les disquettes magnétiques largement commercialisées actuellement à été volontairement passée sous silence pour faire l'objet d'un brevet particulier de notre part.

Le programmateur universel est également équipé d'un interface électronique très élaboré (9) utilisant le réseau alternatif de distribution électrique (E.D.F par exemple) comme ligne de communication, permettant ainsi d'atteindre tous les points desservis par le réseau local (à l'intérieur d'une même entreprise par exemple), sans installation de ligne particulière de communication, sous réserve d'absence de filtres haute fréquence entre l'émetteur et le/les récepteur/s (Transformateurs d'isolement galvanique, redresseur du facteur U/I, compteur électrique etc......), permettant également un contrôle à distance du programmateur universel autonome lors de son fonctionnement automatique, évitant ainsi le besoin d'une surveillance continue sur le plan local.

· Le signal alors transmis pouvant contenir de très nombreuses informations simultanées nécessite un récepteur spécial (ou un autre programmateur universel autonome), car l'interface électronique (9) est composé d'un émetteur récepteur synchronisé sur le réseau alternatif ajustant sa vitesse de transmission avec le dégré de parasitage du dit réseau alternatif (résultant de l'allumage de moteur par des thyristors par exemple), ce récepteur spécial de contrôle ou RECEPTEUR UNIVERSEL AUTONOME fait également l'objet de la présente invention.

Ce contrôleur universel autonome également objet de la présente invention est composé comme l'indique les figures (3) et (4) d'une partie des circuits électroniques, mécaniques et électriques du PROGRAMMATEUR UNIVERSEL AUTONOME, la principale différence est son absence totale de moyen de programmation (ni clavier, ni zone de mémoire programmable directement), son programme en mémoire figée devant être programmé soit en usine, soit grâce au programmateur universel déjà cité, par l'utilisateur lui-même car la destination première de ce contrôleur universel autonome est d'assurer une surveillance discrète personnalisée d'un très haut niveau de sécurité.

L'exemple caractéristique est la surveillance automatique d'un local (une banque par exemple) grâce à un réseau de capteurs classiques (chocs, optique, infrarouge etc...) relié à un contrôleur selon l'invention, lui-même relié sur le réseau électrique (l'éclairage par exemple, avec ou sans piles internes) et le réseau téléphonique normal (intérieur + extérieur). Si quelqu'un arrive à pénétrer malgrés les capteurs et cherche à neutraliser le système de sécurité, en le débranchant de son réseau électrique et/ou téléphonique ou par tout autre moyen, le fonctionnement de l'interface (9) sera altéré (changement de synchronisation, aberration dans les réponses ou absence totale etc.....) sur le réseau alternatif ou/et téléphonique et sera donc immédiatement détecté par un ou plusieurs autre/s contrôleurs restant branchés sur le réseau électrique et/ou téléphonique, pouvant alors être placés n'importe où dans l'immeuble (pour le réseau alternatif), où dans le monde entier grâce au réseau téléphonique créant ainsi une véritable toile d'araignée dont il faudrait couper TOUS les fils en même temps sans en oublier un seul ! Sans oublier le principal avantage, celui d'estimer à sa juste valeur chaque incident de fonctionnement tout en alertant systématiquement les services compétents "ORALEMENT" avec le message pré-enregistré le plus adéquat, distinguant ainsi le simple incident d'une véritable tentative d'effraction du genre "Bonjour messieurs ici .....je vous prévient qu'une mouche marche au plafond de la salle des coffres, amenez un insecticide, merci d'avance." évitant ainsi de réveiller tout le monde à cause d'une panne dans le système de sécurité, ou pire, de faire fuir les voleurs avant l'arrivée de la police !

Dans le cas d'une application industrielle le principe reste le même seul le contenu des messages change, une mini imprimante (3) pouvant alors fournir le résultat de production par jour ou par heure, les pannes qui se produisent avec leurs origines, ou bien appeler immédiatement le dépanneur ! (dans le cas de sécurité la mini-imprimante est à éviter, à cause du bruit qu'elle peut faire).

Le principe de fonctionnement de l'interface secteur (9) est d'émettre et de recevoir périodiquement (ou non suivant son programme) les signaux hautes fréquences synchronisés sur la tension alternative (figure 20)à partir de la détection du passage à zéro (48)durant $T_2$, après un delai $T_I$ pour l'émission, la réponse venant de l'appareil testé pouvant par exemple se faire en $T_3$, $T_4$ sur l'autre alternance qui suit dans le cas minimum, $T_3$ maximum dépendant uniquement du programme de l'appareil testé. Dans le cas d'un contrôle de haute sécurité avec plusieurs contrôleurs autonomes sur le secteur alternatif la réponse de l'appareil testé se fait qu'après expertise du signal reçu.

0089250

Le principe de cette expertise est la mesure du signal par rapport au temps écoulé à partir du passage à zéro de la tension secteur (un faux zéro car le secteur alternatif passe par un intégrateur électronique éliminant tous les parasites haute fréquence et transitoire, l'erreur ainsi introduite est compensée par le microprocesseur dans le calcul comme constante d'intégration).

Tous les temps sont mesurés par rapport au quartz servant d'horloge au microprocesseur, ce qui garanti une très grande précision dans le contrôle avec une grande stabilité dans le temps, aussi bien à l'émission qu'à la réception. La précision réellement utilisée dépends du degré de parasites du secteur servant à la transmission, celle-ci étant beaucoup plus faible que la précision des quartz ($10^{-6}$ soit $10^{-4}$% !) doit être limitée par programme.

L'émission effectuée durant $T_2$ (figure 20) n'est pas un signal haute fréquence continu, mais est fragmenté par des silences à la manière d'un code informatique classique, la vitesse de transmission ainsi que le nombre d'octets transmis varie énormèment avec le dégré de "silence" du réseau (50 Bits/S pour un millieu industriel à plus de 2000 Bits/S pour une maison individuelle), l'information ainsi codée pouvant être sur une demi alternance ou sur plusieurs alternances complètes (de suite ou espacées par des codes "trompe l'oeil") rends pratiquement impossible la falcification de réponse ayant pour but de remplacer un contrôleur hors service.

Pour des raisons de sécurité évidentes le fonctionnement exact de cet interface ne peut pas être détaillé dans cette présentation du contrôleur universel autonome ainsi que celle du programmateur universel autonome qui font tous deux parties intégrantes de la présente invention indissociable.

**0089250**

Dans la partie de la présente invention qui va être décrite maintenant on considèrera ce qui suit comme un exemple particulier et non limitatif de fabrication du clavier graphique (4) et de son mode de fonctionnement par l'intermédiaire de l'interface électronique (5) qui lui est associé, cet exemple étant donné pour faciliter les explications et la compréhension du système et pour montrer à tout homme de l'art la vraisemblance d'une telle réalisation, grâce à des moyens déjà connus.

Le principe de cet interface graphique est de détacher chaque touche du clavier de toute signification fixée une fois pour toute, de façon à pouvoir par simple programme changer la "TRADUCTION" individuelle de chacune des touches composant le clavier, qui se transforme alors en une véritable table à dessin miniature, le contour des touches formant un quadrillage guidant le traçage du dessin (figure 9) avec le doigt ou un stylet arrondi suivant la définition de surface choisie pour le dessin (par exemple un capuchon de stylo à bille).

Chacune de ces surfaces élémentaires étant repérée par le système de coordonnées (X,Y) classiquement utilisé pour détecter l'appui d'une touche sur un clavier normal, permets de rendre le dessin directement accessible au stockage et à l'analyse électronique sans AUCUN interface supplémentaire!

Les touches mécaniques classiques ne pouvant convenir à cause de leurs dénivellation désagréable au toucher et d'une définition de surface ponctuelle insuffisante, le choix s'oriente vers les claviers extra-plats à dômes métalliques qui permettent une localisation ponctuelle très sensible au toucher, mais demandant une précision dans le montage augmentant avec la définition du dessin, ou bien vers les claviers en élastomère dont la résistivité électrique varie énormément avec la pression exercée sur lui, qui eux permettent une très grande définition de surface mais sont peu ou pas sensibles au toucher.

Physiquement un tel clavier peut se construire grâce à un circuit imprimé double face en époxy, pouvant servir également de support mécanique du fait de sa rigidité importante. Le dessin des contacts pouvant par exemple être celui de la figure (IO), constitué d'une large bande cuivrée (32) où des zones nues (30) ont été aménagées pour laisser ressortir la seconde partie du contact électrique provenant de l'autre face grâce à un trou métallisé (3I), ce qui permets une trame très simple à réaliser.

En jouant sur la densité de surface, sur la différence entre les diamètres des zones nues (30) et le bord du trou métallisé (3I), on peut obtenir toutes les sensibilités et définitions possibles aussi bien avec des dômes métalliques venant coiffer les zones (30) et (3I) (le contact entre les deux se fesant par déformation mécanique du dôme), aussi bien qu'avec un film élastomère qui viendrait recouvrir l'ensemble du clavier ainsi formé.

Grâce au clavier graphique ainsi formé l'interface électronique (5)/fig.I peut travailler "MOT A MOT" en donnant à chaque touche une fonction ou une valeur programmée (utilisation courante d'un clavier), mais surtout en "EMPILAGE" graphique considérant toute la surface du clavier comme un ensemble de points élémentaires pouvant former un dessin au même titre que les lettres forment les mots puis les phrases, sans s'occuper de leurs significations à titre individuel, une seule touche restant dans ce mode de fonctionnement individuel pour signaler à l'interface la fin de cet empilage graphique, cette touche peut être utilisée dans l'empilage mais juste à la fin.

Le principe de fonctionnement général de l'interface (5) est de stocker toutes les touches appuyées en les classant dans l'ordre de priorité ou d'arrivée, suivant le programme utilisé, jusqu'à l'appui final lui signalant le dernier point du graphique, déclanchant ainsi le traitement

après la reconstitution globale du "CARACTERE" ainsi formé, quelqu'il soit, aussi bien un signe (rond, carré, etc...) qu'un mot ou une phrase ou encore un texte en langue QUELCONQUE !

Cet "EMPILAGE GRAPHIQUE" n'étant limité que par le nombre de touches disponibles sur le clavier, et la capacité de mémoire vive utilisée, rends les combinaisons infini, pour bien se rendre compte des possibilités d'un tel clavier graphique il suffit de considérer quatres points seulement avec un seul appui par point (figure II), choix apparemment très limité (ce qui est vrai) mais abouti DEJA à 16 possibilités! résultat prévisible car il s'agit d'éléments distincts à ordonner ayant pour formule $2^n$ (n étant le nombre de ces éléments), ce qui aboutirait avec 40 touches (comme une machine à écrire) à $10^{12}$ possibilités, et en limitant à un seul appui !

Si maintenant l'interface classe lui-même les points par ordre de priorité et non plus d'arrivée comme précédemment, seul le graphisme résultant compte (même en cas d'appui multiple d'une touche) ce qui réduit à une seule et UNIQUE possibilité l'appui des 40 touches ! néanmoins pour les 4 points (figure 9) même en restant groupés ils peuvent encore prendre 49 positions différentes sur un clavier de 8x8 touches, qui peuvent encore être ramenés à une seule solution par une analyse plus poussée.

Le même principe du clavier graphique peut être appliqué à un écran de télévision, avec le traçage d'un quadrillage (ou non), un capteur spécial pour dessiner (fibre optique par exemple), avec un véritable monstre comme ordinateur car la définition d'un écran 30 Cm. est d'environ 50.000 POINTS, sans compter les 8 couleurs de bases possibles ! (sans oublier le repérage synchronisé sur le balayage vidéo, bien sûr).

Dans la réalité il suffirait de décomposer l'écran vidéo en plusieurs "claviers graphiques" justaposés et analysés successivement, et de diminuer la résolution de surface, avec une seule couleur par exemple.

0089250

Cet interface électronique ou "traducteur universel"
se distingue de l'art antérieur de par son fonctionnement
autonome et par son clavier graphique, composé en
réalité de deux claviers distincts l'un réel fournissant
la définition maximum du dessin en mode graphique (celui
de la figure 13 par exemple qui comporte 125 touches
REELLES), l'autre clavier APPARENT vient recouvrir
l'ensemble des points définis par le clavier REEL (par
exemple celui de la figure 14 qui lui ne comporte que
25 touches APPARENTES ).

Ce clavier apparent n'est qu'un moyen de repére
pour l'opérateur qui l'utilise et peut donc être composé
d'un simple film plastique auto-collant ou amovible
pouvant être changer très facilement et à peu de frais,
juste une "étiquette" à changer pour augmenter le nombre
de touches utiles, ou bien créer une nouvelle fonction,
ou encore tout un alphabet !

Cet interface de traduction universelle a été
spécialement étudié pour rendre accessible un système
informatique quelconque à n'importe qui, d'un niveau
maternelle grâce aux commandes graphiques (rond, carré,
triangle etc...) jusqu'au niveau ingénieur directement
dans la langue courante du pays EN Français, Anglais,
Allemand, Espagnol, Portugais, Grec, Russe, Chinois,
Japonais et leurs dérivés. L'adaptation de cet interface
à un système déjà existant se ramene à un simple cablage
électrique SANS AUCUNE modification du système principal,
la traduction machine vers l'affichage et clavier vers
machine étant entièrement autonome grâce au microprocesseur
intégré dans l'interface de traduction.

Mais tout système de décodage classique devient
inutilisable car par exemple dans le cas de 125 touches
réelles avec seulement 25 touches apparentes à double
fonction (figure 13 et 14) chacune de ces touches
possèdent 5 codes différents, il a donc été imaginé un
système de traduction universelle.

- I3 -

0089250

Le principe de cette traduction tabulaire universelle
est de permettre le passage d'un code à traduire (X?)
vers une traduction (Y) de nature et de dimensions
totalement indépendantes, pour se faire on utilise une
comparaison tabulaire synchrone à paramètres multiples
qui va être décrite maintenant grâce à la figure I5.

Dans une table en mémoire morte ou programmable (4I)
on range tous les codes X que l'on veut pouvoir traduire
chacun d'entre eux ayant une longueur $L_x$ (nombre d'octets
nécessaires au stockage du code X), dans une autre pile
(44) on range toutes les traductions $Y_n$ en correspondance
avec les codes $X_n$ chacune ayant un standard $L_y$ indépendant
du standard $L_x$ (nombre d'octets nécessaires au stockage
de la traduction Y).

Une fois ces tables de codes (4I) et de traductions
(44) établies, on utilise un registre dynamique pour
indexer le premier octet du code $X_I$ (42) et un autre pour
indexer le premier octet de la traduction $Y_I$ (45),
en s'imposant une butée de recherche (43) au cas où le
code à traduire ($X_?$) ne se trouverait pas dans la table
(4I) ainsi explorée.

Le principe de cette traduction tabulaire synchrone
est de comparer le code à traduire ($X_?$) avec tous les
codes X contenus dans la table 4I choisie par l'intermédiaire
de la valeur initiale du registre 42, tout en conservant
l'indexation de leurs traductions respectives grâce au
registre 45, les codes X ayant un standard $L_x$ et les
traductions un standard $L_y$ le passage de $X_n$ et $Y_n$ à
$X_{n+I}$ et $Y_{n+I}$ se fait par une simple addition aux registres
d'indexation (registre $42+L_x$ , registre $45+L_y$), ce qui
permets lors de l'égalité entre $X_?$ et $X_n$ de disposer
instantanément de la traduction $Y_n$ par simple lecture
par rapport au registre 45.

Une telle traduction est dite universelle car il
n'existe aucune relation logique ou mathématique entre le
code à traduire $X_?$ et sa traduction Y, tout en restant
totalement réversible (code vers traduction et traduction
vers code), chaque code pouvant avoir plusieurs traductions par simple modification initiale du registre 45, et chaque traduction pouvant avoir plusieurs codes par modification du registre 42 initial.

Dans le cas choisi pour exemple (I25 touches réelles, 25 apparentes) il suffirait de ranger à la suite les uns des autres les 5 codes correspondants à une même touche dans la table 4I, de donner la valeur "I" à $L_x$ et d'ajouter $E_y$ au registre 45 seulement toutes les 5 comparaisons, la non réversibilité des tables de codes et de traductions (une traduction = 5 codes possibles ou un paramètre supplémentaire pour le choix) n'ayant dans ce cas aucune importance car le clavier ne se transforme pas en afficheur.

Lors du travail de l'interface en mode graphique, il convient de distinguer deux sortes de graphisme, l'un "semi-graphique" composé d'appuis séparés de touches à valeurs déterminées comme les lettres de l'alphabet pour composer un mot comme "lecture" par exemple, l'autre véritablement graphique composé par une pression continue sur le clavier et se déplaçant sur différentes touches successivement.

Dans le mode graphique, compte tenu de la densité de contacts relativement élevée, il a été nécessaire de concevoir un traitement de comparaison tolérant certaines erreurs de façon à pouvoir dessiner "à main levée" sans précision trop pointue et surtout de pouvoir comprendre les graphiques INACHEVES par l'oubli d'un ou plusieurs points, sous réserve de non similitude entre deux dessins différents ayant des points communs qui serait traité alors comme une erreur de l'opérateur.

Le principe est de considérer comme "POSSIBLE" tout code de référence $X_n$ dont les premiers octets mémoires (2 ou 3 par exemple) sont identiques au code à traduire $X_?$ et à partir de ce moment seulement de pouvoir considérer avec indulgence les petites erreurs ne pouvant découler d'un code de référence erroné, par exemple moins de 2 erreurs successives. A partir d'un certain total d'erreurs (3 par exemple) dans le graphisme complet l'adresse du code de référence $X_n$ est mise en mémoire avec le nombre d'erreurs et considéré comme "PEU VRAISEMBLABLE". Tous les codes " peu vraisemblables " sont classés suivant leurs nombres de différences avec le code à traduire $X_2$ dès que la table des codes (4I) a été totalement explorée et qu'aucune coïncidence parfaite n'a été trouvée, celui possèdant le moins de différences vis à vis du code $X_2$ est visualisé sur l'afficheur en attente d'une confirmation, par exemple l'appui d'une touche au clavier dans les 5 secondes qui suivent, sinon chacun des codes "peu vraisemblable" seras visualisé l'un après l'autre et le dernier déclanchant la procèdure générale d'erreur dûe à l'opérateur qui consiste à redemander la totalité du graphisme, avec le cas échéant une confirmation de données antérieures (mode d'écriture, d'accès, de nom de code etc...).

Un tel traitement permets de passer du mode "semi-graphique" au mode "graphique" par simple modification des tolérances d'erreurs de 6 à 2 par exemple, permettant ainsi d'abréger au maximum l'écriture des ordres de commande et de programmation sans risque d'erreur automatique, les propositions faites devant être confirmées par l'opérateur ce qui donnerait en mode semi-graphique :

"DEC." au lieu de l'écriture complète "Décalage de mémoire", par exemple.

La conception d'un tel interface électronique graphique possède la même allure générale que les systèmes de gestion clavier et afficheur actuel (figure I2) à savoir :

Un circuit de balayage automatique (33) (par exemple le 8279 de chez INTEL), associé à un décodeur classique (38) de 4 entrées vers une sortie parmis I6 (par exemple le 74I54), associé à un décodeur de caractères à I6 sorties indépendantes (7 seulement pour un afficheur à diodes lumineuses)(34) par exemple consistitué par 2 mémoires programmables 27I6 adressées en parallèle par les 8 Bits de données venant du circuit de gestion (33) permettant ainsi 8 tables de décodage distinctes de 256 caractères chacune grâce aux adresses libres $A_8A_9A_{10}$ modifiables instantanément par le microprocesseur (40) pour s'adapter avec le code utilisé par le système principal qui commande l'interface, les circuits intégrés étant trop faibles

en puissance pour alimenter directement l'afficheur (36) tous les signaux de commandes passent par des amplificateurs ('35,37) à transistors par exemple. Le contrôle du clavier graphique (39) se fait simultanément avec l'affichage, le signal du décodeur (38) balayant les colonnes du clavier (39) revenant le cas échéant sur l'une des 8 entrées disponibles sur le circuit de gestion (33) par l'intermédiaire de la touche appuyée dans la colonne balayée, un signal est alors émis vers le microprocesseur (40) avec ses mémoires de programme et ses tables sans interrompre le travail d'affichage. Dans l'exemple choisi avec le 8279 de chez INTEL, on peut disposer de I6x8 = I28 touches SANS circuits supplémentaires compatible avec l'exemple de la figure I3 qui en comporte I25, avec des circuits supplémentaires le nombre maximum peut atteindre I024 et plus mais généralement inutile pour des applications courantes.

L'utilisation d'un circuit de gestion automatique (33) permets de libérer le microprocesseur (40) de toute la gestion de l'affichage (I6 digits de I6 segments d'un tube fluorescent par exemple) et du clavier graphique (I25 touches par exemple) afin de disposer d'un maximum de temps libre pour les traductions machine/affichage, clavier/machine et le dialogue avec le système principal relié à l'interface (machine).

Dans le mode graphique, le traitement de chaque touche se fait APRES le relaché mécanique, non avant comme actuellement, ce qui permets de traiter la dernière touche relachée lors d'un appui multiple avec changement possible de touche appuyée tant qu'un appui est maintenu sans programme supplémentaire, ou bien de bloquer tout le système si le microprocesseur (40) est celui du système principal par simple appui maintenu au clavier (arrêt d'urgence). La traduction des "dessins" se fait alors par multiple du standard $L_x$ permettant le traitement quelque soit le nombre d'appuis, la table de traduction contenant les adresses équivalentes des traductions permettant la comparaison des résultats intermédiaires et non les traductions elles-même.

- I7 -                                          0089250

La présente partie de l'invention constituant le
magnétophone évolué (I5)/du programmateur et du contrôleur
fig.I
universels autonomes qui va être détaillée maintenant
est principalement basée sur l'emploi d'un magnétophone
à mini cassette standard  et de son interface électronique
comme moyen de communication et de stockage informatique
de masse restant parfaitement utilisable en quelques
minutes.

Pour faciliter la compréhension et les explications
de ce magnétophone évolué, on considèrera ce qui suit
comme un exemple particulier et non limitatif de
réalisation possible d'un tel appareil, cet exemple
étant donné pour montrer à tout homme de l'art la
vraisemblance de la dite réalisation technique avec des
moyens déjà connus actuellement.


On se propose en premier de rechercher sur une mini-
cassette un programme contenu sur l'une des faces sans
indication de position, ni intervention manuelle pour
changer la face de lecture, en un minimum de temps avec
une densité maximum d'informations élémentaires (Bits).

La densité couramment admise pour une bande magnétique
informatique étant de I00 Bits par millimètre, en choisissant
un standard de transmission de 64.000 Bauds (Bits/S) très
facile à réaliser avec un seul circuit intégré (le 825I de
chez INTEL par exemple) tout en permettant encore une
lecture analogique (musicale) au niveau des têtes magnétiques,
la lecture d'une cassette C.60 aboutissant à une durée
de 60 minutes (à 4,75 Cm/S) il faut donc augmenter la
vitesse de lecture pour rendre sa durée raisonnable, sans
dépasser les 64.000 Bauds, ni descendre en dessous du I/I00mm
par Bit d'où une vitesse limite de 64.000x0,0I= 640 mm/S
soit I2 fois la vitesse de lecture normale ou encore la
vitesse usuelle de rembobinage rapide d'une mini cassette.

La mécanique classique d'un magnétophone comprends une transmission par courroies servant en même temps de limiteur de couple, un volant d'inertie pour la régulation mécanique de la vitesse, et un entrainement de la bande magnétique par friction lors de la lecture aboutissant à un véritable laminage comme le montre la figure I6, le mouvement provenant de la rotation du pivot métallique de petit diamètre (I8) transmit par friction à la bande (20) grâce à la pression très élevée imposée par le galet en caoutchouc (I9) libre en rotation sur son axe.

Tous les essais prolongés effectués à grande vitesse ont aboutis à l'abandon de ce système d'entrainement classique pour les raisons suivantes :

A très grande vitesse le glissement des courroies devient trop important provoquant une usure rapide des courroies, rendant le contrôle de la vitesse délicat, avec un couple insuffisant pour un bobinage correct et beaucoup de vibrations.

Le manque de guidage de la bande dans le boitier de la mini cassette ainsi que les vibrations aboutissent au blocage complet de la bobine d'enroulement comme le montre la figure I7, la bande (20) se déplaçant latéralement pendant l'enroulement vient frotter sur les paroies du boitier (23) à l'intérieur de la mini cassette augmentant ainsi le frottement jusqu'au blocage complet, ce phénomène provient surtout d'une tension incontrôlée dans la partie de la bande avant la tête de lecture (2I) (à gauche dans la figure I6), la bobine entrainée n'étant pas freinée se dévidant par à coups à cause du jeu très important dans la zone d'entrainement (24, figure I7)deI à 2 millimètres! .

A très grande vitesse le morceau de feutre (22) fig.I6 placé dans la mini cassette pour maintenir la bande (20) en contact avec la tête de lecture (2I) crée un frottement important augmentant la puissance nécessaire à l' entrainement mécanique de la bande.

Le galet en caoutchouc (I9) provoque un laminage avec abrasion et échauffement de la bande magnétique (20) avec une perte progressive du contenu magnétique, aboutissant à sa destruction rapide.

Et enfin le plus important des problèmes posés par un tel système mécanique, l'impossibilité de commande électroniques sans passer par l'emploi d'électro-aimants !

Tous ces problèmes ont aboutis au choix d'entrainement indépendant pour chacune des bobines d'enroulement (figure I8) à l'aide de deux blocs moteurs (26,25) actionnant directement les axes de bobinage, rendant la télécommande très simple et souple, la lecture possible dans les deux sens en petite et grande vitesse, une tension constante et réglable de la bande magnétique grâce à la réversibilité totale des blocs d'entrainement (25,26) en moteur ou en frein, par exemple constitués d'un moteur à courant continu avec un réducteur (vitesse de sortie 500 à 700 tours/minutes), permettant un ralentissement parfaitement contrôlé pouvant aller jusqu'au blocage pour un arrêt rapide.

Le coût apparemment plus élevé est compensé par l'absence totale de mécanique de commande manuelle, pas de courroie à changer régulièrement, moins de main d'oeuvre au montage tout en augmentant la fiabilité et la longévité du mécanisme, en plus l'électronique au stade industriel étant très économique.

En revanche ce type d'entrainement direct pose trois problèmes importants (mise à part la commande électronique) à savoir la nécessité de limiter le couple transmi à la bande, de contrôler la vitesse de lecture, et surtout de ne jamais arriver en fin de bobinage en vitesse maximum, par exemple avec une bande de 90 minutes dont le diamètre d'enroulement varie 20 à 50 mm et à une vitesse initiale de 640 mm/S demanderait une vitesse maximale d'enroulement de I0,2 tour/S (640/(20x3,I4)= I0,2) aboutissant en butée de fin de bande à I602 mm/S (I0,2x50x3,I4=I602) provoquant un choc très violent risquant de briser la bande malgré le limiteur de couple qui pourrait être intégré dans la transmission mécanique.

Pour remédier à ces problèmes il a été conservé le système d'entrainement par friction (figure I6) en diminuant au maximum la pression du ressort sur le galet en caoutchouc (I9), en fixant sur le pivot (I8) un capteur optique de rotation sur roulement à bille pour réduire les frottements et obtenir une mesure réelle de la vitesse de lecture de la bande (20) sous forme digitale (très précise) permettant un contrôle électronique de la vitesse.

Pour la détection de fin de bande et du choc qui en résulterait, les ergots de centrage du boitier de la mini cassette ont été remplacés par un système de détection optique (émetteur + récepteur) qui seront masqués par la partie active de la bande magnétique (marron, opaque) et non par les extrémités constituées d'un plastique plus résistant aux chocs que le reste de la bande (transparent), permettant ainsi de détecter avec précision la fin de bande AVANT le choc (réserve d'environ 20 Cm, (27)figure I9).

Le pivot de petit diamètre (I8) doit être particulièrement soigné à la construction car il tourne très vite, par exemple avec un diamètre de 3,I8 mm à 640mm/S il tourne déjà à 64 tours/S (640/3,I8x3,I4=64) avec un maximum de 96I2 tours/minute à I602 mm/S ! Cette grande vitesse à l'avantage de permettre l'utilisation d'un capteur optique rudimentaire (I6 ou 32 secteurs par tour) tout en restant accessible à une régulation digitale rapide (I/I0 S par exemple).

Le dernier problème qui restait à résoudre était de pouvoir lire les deux faces de la cassette sans retourner manuellement la bande, pour cela le choix a été d'employer une tête multi-pistes(5 par exemple) occupant toute la largeur de la bande (4 mm pour une mini-cassette) permettant un changement de face de lecture immédiat par inversion du fonctionnement des blocs d'entrainement (25,26) en sélectionant les 2 autres pistes (celle du millieu étant la piste de synchronisation en lecture informatique, dans le cas d'une tête 5 pistes).

En ce qui concerne la mise en place de la tête de lecture (2I figure I6) et du galet (I9) il a été choisi un système purement mécanique lié au capot de protection (29 figure 8) permettant l'accès à la mini cassette (23) à l'intérieur du boitier (I) grâce à une articulation fixée au support de la tête de lecture, du galet et de la tête d'effacement (I2I figure I9, vue de l'ensemble final).

Un tel magnétophone avec sa commande électronique permets par exemple de lire une cassette stéréophonique sans coupure à la moitié, l'interruption réelle étant si courte qu'elle passe presqueinaperçue à la restitution auditive, ou bien de parcourir une bande informatique à la recherche d'un programme sans s'occuper de la face présentée en lecture!

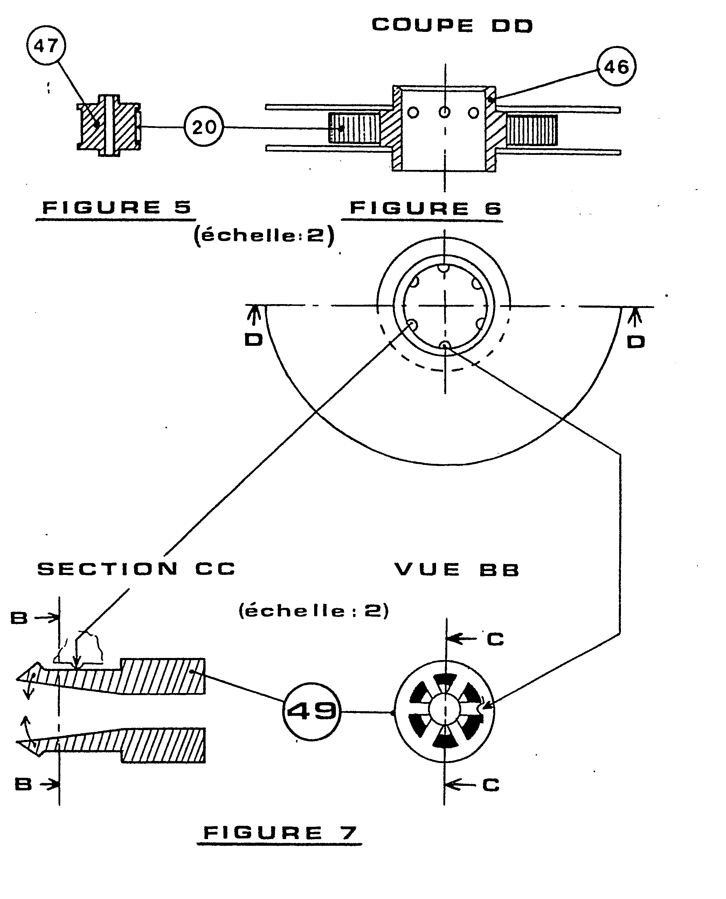

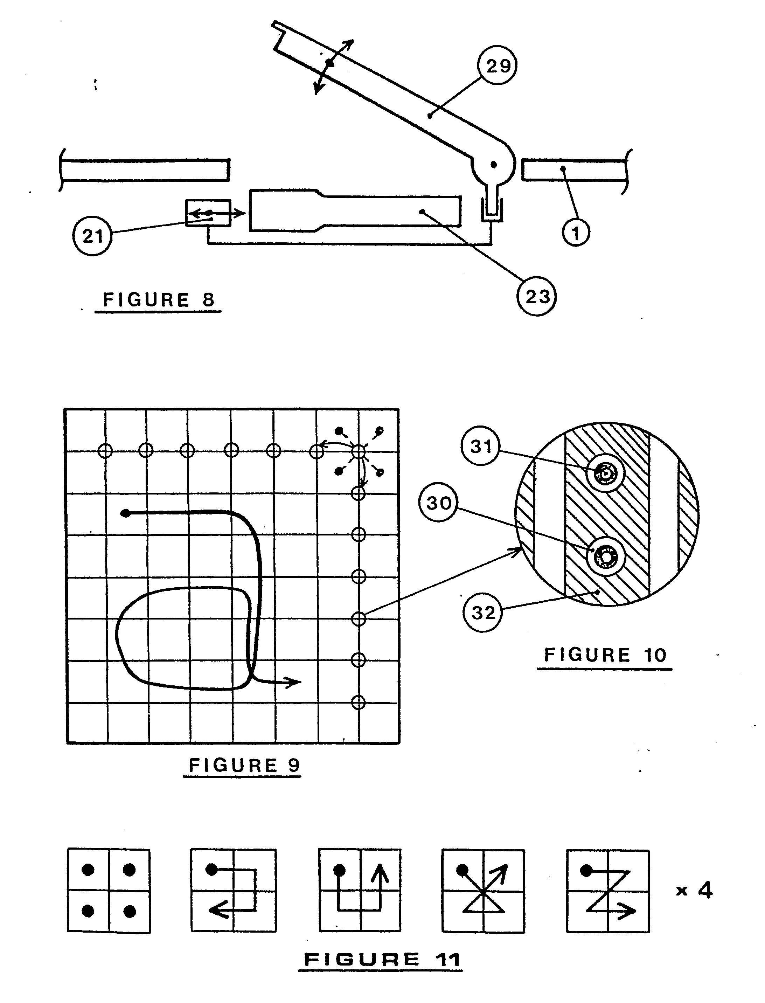

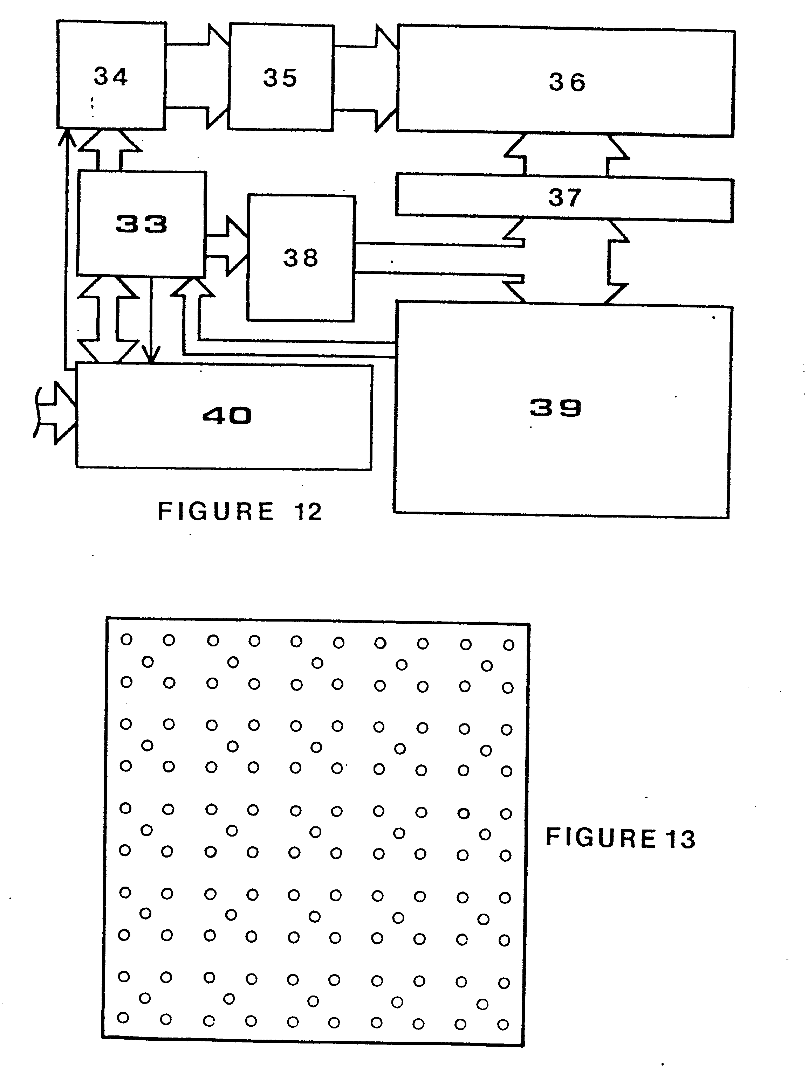

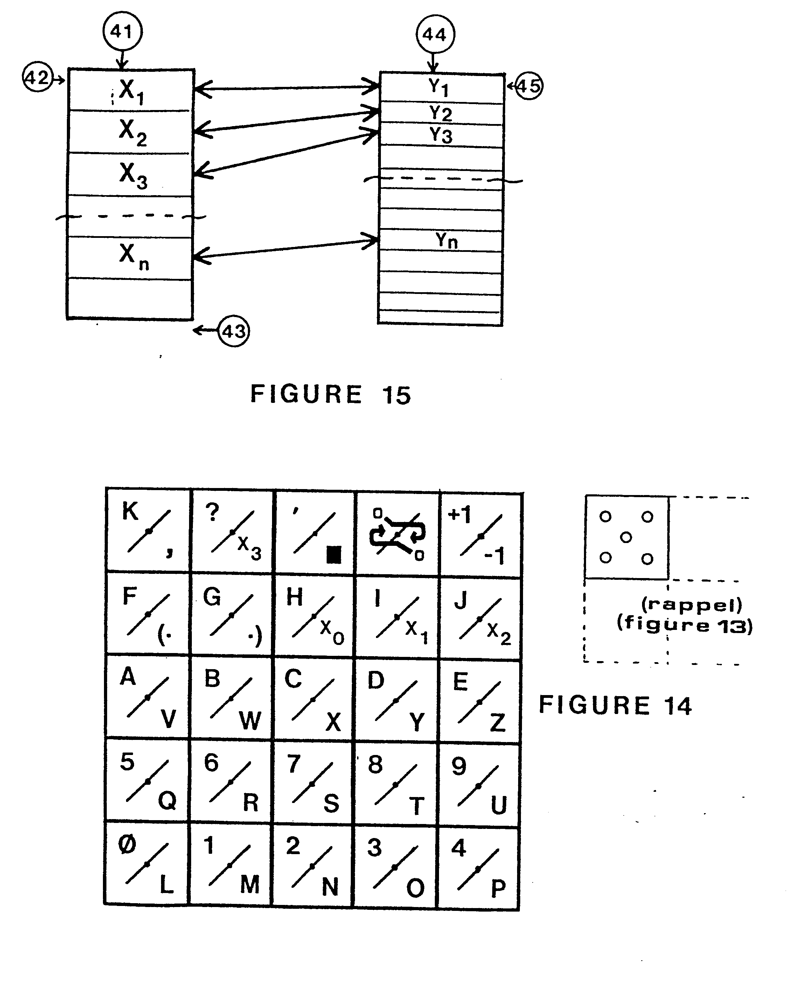

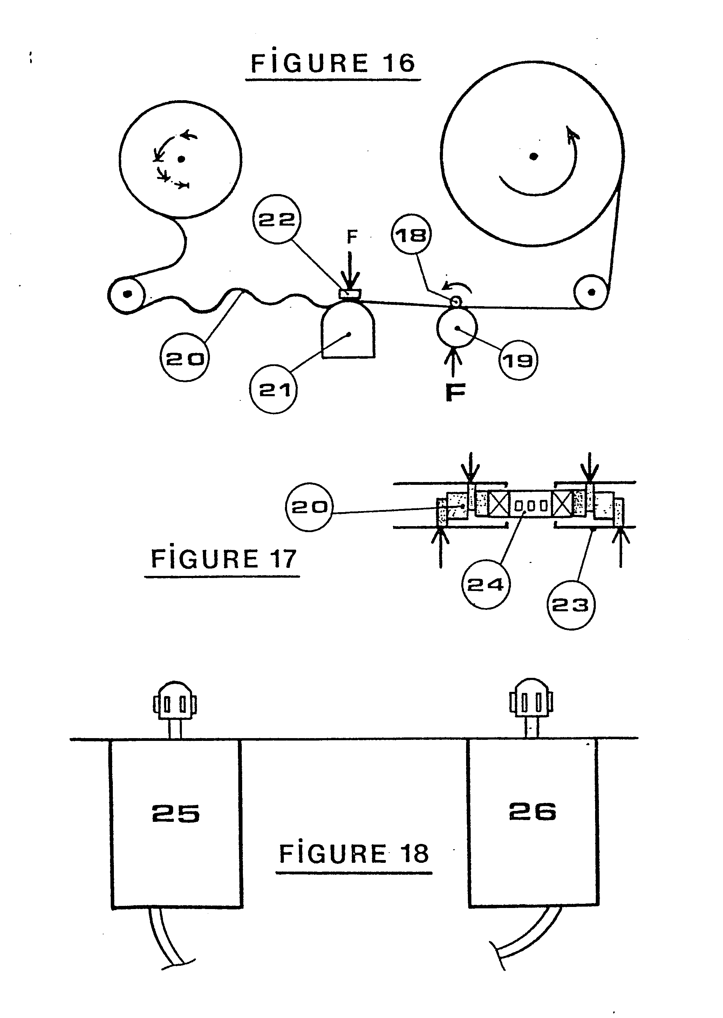

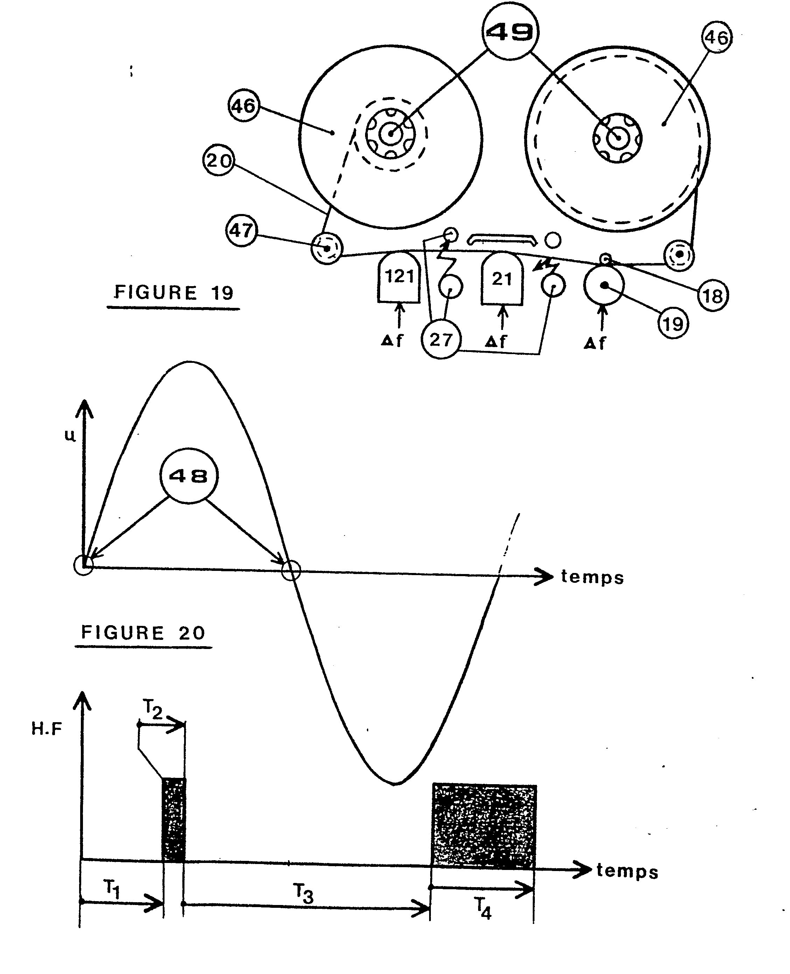

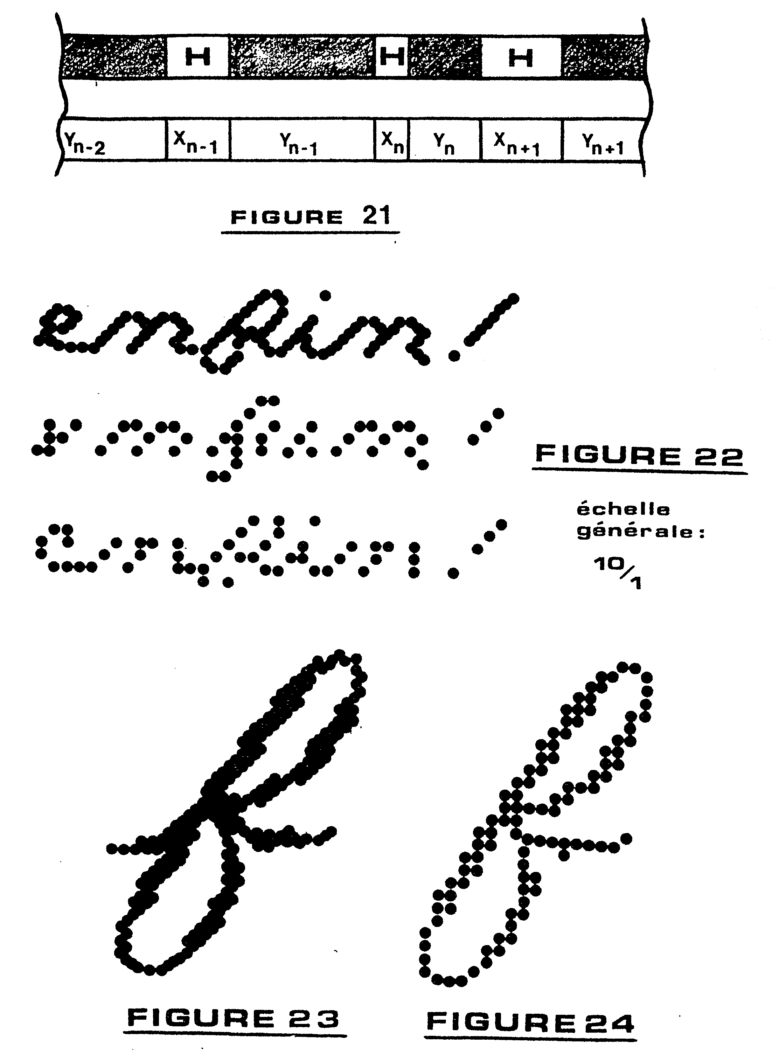

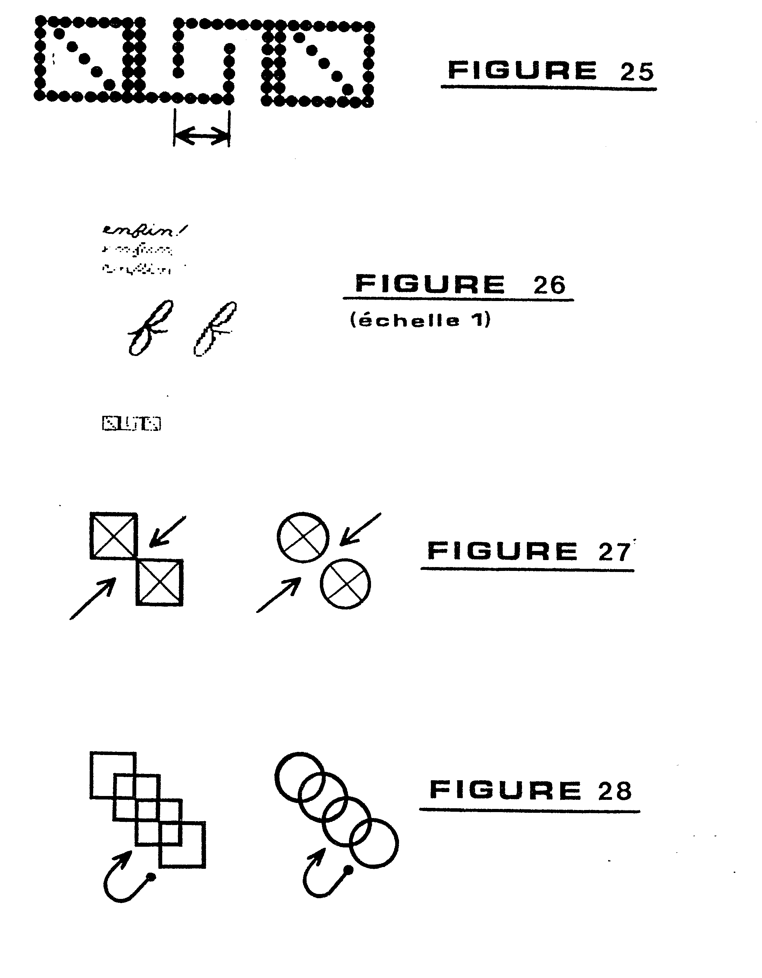

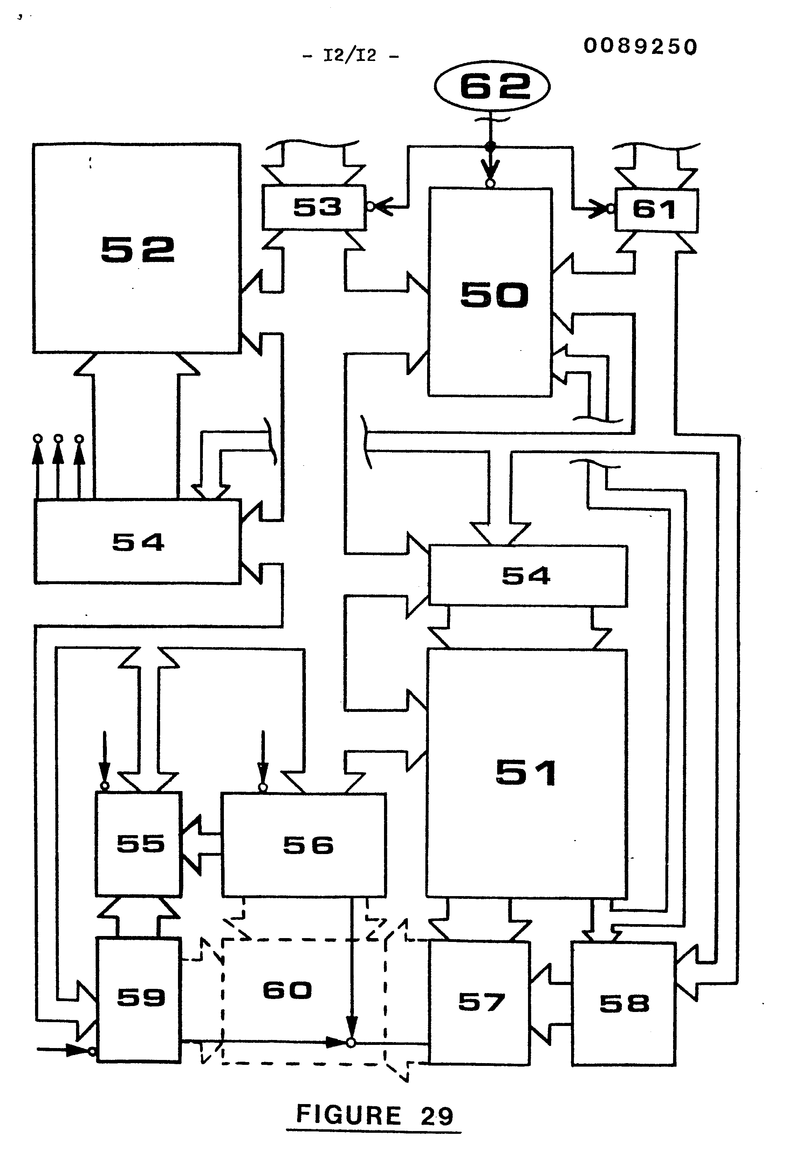

Dans la majorité des cas toutes les mini-cassettes peuvent être utilisées avec une usure plus ou moins rapide, mais les meilleurs résultats ont été obtenus en enlevant le morceau de feutre (22 figure I6) et en remplaçant les bobines d'enroulement par des modèles comme la figure 6 (46) avec des flasques latéraux et galets de guidage (figure 5) à l'intérieur même de la cassette, un manchon (49) limiteur de couple (figure 7) à griffes élastiques permettant une liaison sûre et précise de la bobine (46) avec les blocs d'entrainement. Le contact entre la bande magnétique et la tête de lecture se fesant par pression dynamique, entre la bande tendue par les deux blocs d'entrainement et un très léger ressort sur la tête, disparait lors de l'arrêt complet de la mécanique.

En ce qui concerne les capacités d'une telle cassette en mémoire informatique, en se basant sur l'emploi d'une C.90 (90 minutes normales, au lieu des I20 minutes maximum), avec 4 pistes dont une de synchronisation à 64.000 Bauds et 640 mm/S en lecture, on obtient 400 Secondes de lecture ( (90x60)x(47,5/640)= 400,8 soit la durée normale par le rapport des vitesses de lecture) pour 2 pistes, compte tenu des 3 pistes de libre et des 64.000 Bits/S on obtient 4,8 MILLIONS D'OCTETS (8Bits) équivalents à 3 DISQUETTES CLASSIQUES

0089250

8 pouces double face et double densité, tout en restant
utilisable en IO minutes MAXIMUM ! (3 minutes si on connait
le numéro de la piste où chercher).

Même en n'utilisant qu'une faible partie de cette
capacité théorique pour des raisons diverses, il reste
très facile d'y ranger plus d'un million d'octets avec une
tête 4 pistes standard, tout en offrant un prix de revient
très faible vis à vis d'une mémoire classique de même
capacité (toute fois beaucoup plus rapide), sans compter
son utilisation possible comme interface de communication
ORALE EN PAROLE NATURELLE !

Dans le cas d'une reconstruction orale et HUMAINE
d'un texte écrit, on utilise la traduction tabulaire
universelle (figure I5) le code à traduire ($X_n$) est alors
composé par l'orthographe du mot à prononcer (code qui
sera comparé avec le mot écrit au clavier), la traduction
($Y_n$) étant pré-enregistrée par un opérateur humain
constitue la prononciation ORALE NATURELLE. Les natures
totalement différentes des codes X et des traductions Y
obligent à utiliser directement la bande magnétique (ou le
disque optique) comme support mémoire, la parole humaine
étant inintelligible par un système informatique et sa
reconstitution ne pouvant se faire qu'avec des déformations
sonores importantes (cas des systèmes actuels).

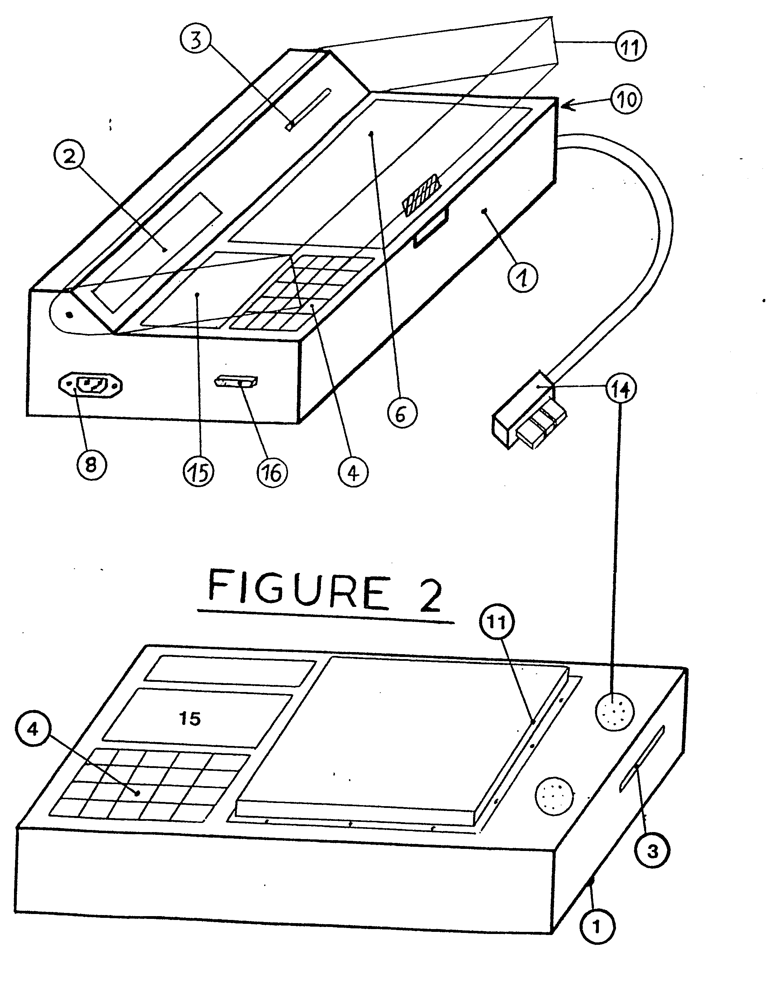

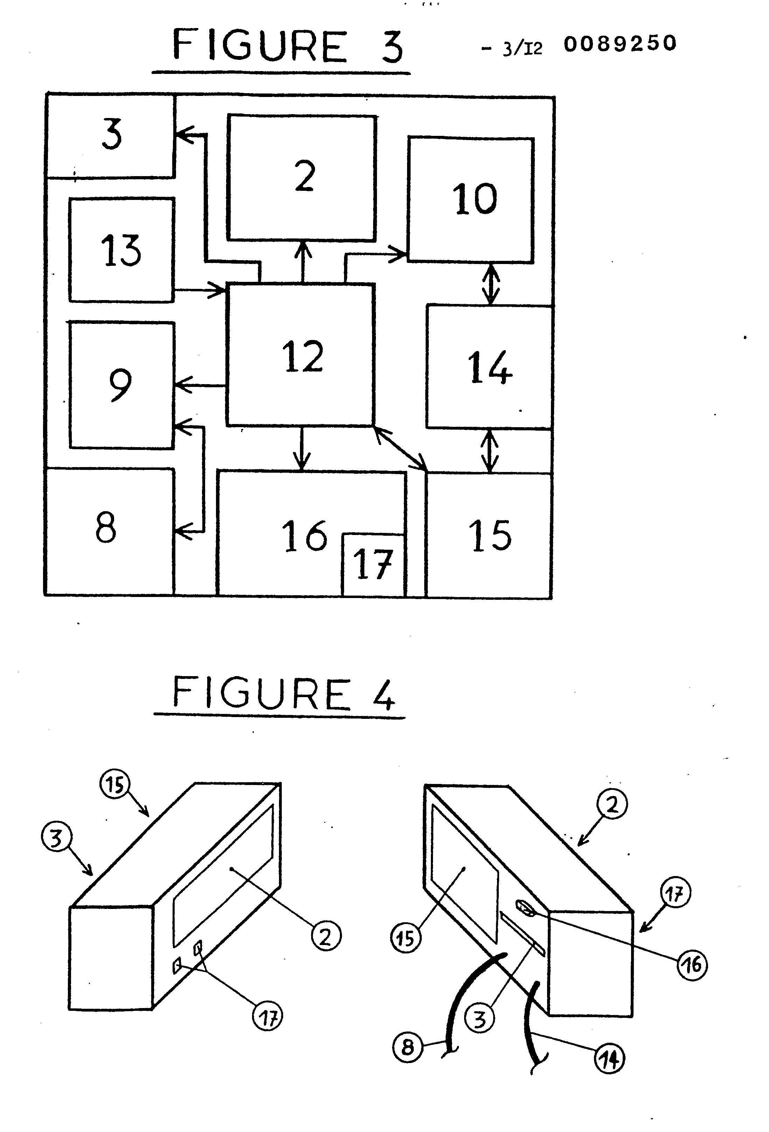

La longueur de prononciation ne pouvant être standardisée,
il faut donc pouvoir déterminer le début et la fin de
chaque traduction orale, pour se faire on intercale les
codes X entre les traductions Y (figure 2I) sur la même
piste et sur une autre piste parallèle on enregistre le
signal de synchronisation de lecture (horloge de référence,
(H) figure 2I), son absence signalant une traduction orale
rends toute confusion impossible tout en permettant une
lecture ultra-rapide indépendante de la vitesse de la bande
magnétique.

Une fois ce dictionnaire oral construit, il suffit de
rechercher dans le texte à traduire en mémoire tampon,
chaque groupe de caractères (touches) séparés par un espace
blanc naturellement inclu dans l'écriture au clavier

0089250

afin de comparer ceux-ci avec les codes X disponibles sur la bande magnétique, une fois localisé chacune des traductions orales est empilée sur le deuxième magnétophone évolué commandé par le même système de gestion électronique, la ponctuation jouant alors un rôle très important sur l'espace entre chaque mot, sur le volume sonore pour l'intonation, sur la vitesse et la tonalité rends la reconstitution orale véritablement HUMAINE.

Cet interface peut servir d'interprète en utilisant deux langues différentes pour l'écriture et la lecture, de maitre d'école pour apprendre à lire et à écrire à de jeunes enfants ou d'un autre niveau jusqu'à l'ingénieur, de répondeur téléphonique à très longue autonomie ( 2 heures) etc......

L'interface électronique utilisant une technologie évidente pour tout homme de l'art ne sera pas décrit dans dans les présentes explications, sa construction n'étant que la juxtaposition de techniques très connues comme les magnétophones haute fidèlité (HI.FI) avec leurs régulation de vitesse associé à un microprocesseur et à un système de lecture informatique élémentaire.

En conservant exactement les mêmes principes de stockage et de traitement, on peut remplacer la bande magnètique (très abrasive pour les têtes) par une bande optique à lecture ponctuelle (moins de 0,Imm pour un laser, ou une lampe de forte puissance) permettant d'augmenter la vitesse de lecture et de supprimer l'usure des têtes celles-ci ayant plus besoin de frotter sur la bande.

La surface utile d'une telle bande est énorme, par exemple pour une longueur de I28 Mètres sur 4 millimètres de large (90 minutes de lecture à 47,5mm/S) on obtient 512.000 mm$^2$, équivalents à 7 FACES d'un disque de 30 Cm !

Sans compter les nombreuses pistes possibles en parallèles (40 théoriques) dont il suffirait de décaler les têtes de lecture (en quinconce par exemple).

La partie maintenant détaillée concerne l'interface électronique de composition graphique associé à l'imprimante (3), cet interface a été spécialement étudié pour permettre une écriture universelle à partir de moyens déjà connus de l'art antérieur (les imprimantes graphiques à points, ou les écrans vidéo noir ou couleurs, par exemple ) indépendamment de la nature, du style ou des dimensions des caractères utilisés aussi bien par les alphabets classiques comme le Français, le Grec ou le Russe que purement graphique comme le Chinois ou l'Arabe par exemple.

Chaque caractère est décomposé en surfaces élémentaires NON réduite à un point unique comme actuellement mais composée par un ensemble de points pouvant posséder leurs propres couleurs ou intensités rendant ainsi chaque surface différente de toutes les autres, la reconstruction du caractère se fesant par superposition ou juxtaposition de ces surfaces élémentaires leur nombre dépendant du compromis entre la netteté maximum (nombre de passages infini) et la rapidité maximum de l'écriture sur le support utilisé (lent sur papier, très rapide sur écran vidéo).

Le principe utilisé est celui de la traduction tabulaire déjà détaillée précédemment, la table de traduction (44 figure 15) comporte la définition de chaque point composant la surface élémentaire (position relative, couleur, intensité de frappe ou de lumière, focal etc...) avec la position de la surface ainsi définie dans le caractère à construire.

Cette table de traduction (51 figure 29) commande directement le système d'impression (57) mécanique ou optique avec ses commandes annexes (58) de couleurs, de focal ou de force d'impact etc.... sous le contrôle du microprocesseur (50) avec ses mémoires de programmes lui permettant de commander le positionnement du système d'impression (57) grâce au bloc de balayage vertical (59) et horizontal (56) mécaniques dans le cas d'un support (60) papier ou électroniques pour un écran vidéo.

0089250

Le positionnement est déterminé par calcul vis à vis de la hauteur, du style ou de la couleur du caractère précédent grâce aux informations fournies par le décodeur (5I) lors de la traduction, ce système permets de déformer l'image résultante par simple modification de la formule de position aussi bien sur la forme que sur la luminosité ou la couleur, sans aucune complication supplémentaire (pas de signaux analogiquesà superposer avec les signaux de balayage par exemple).

Le principe de fonctionnement de cet interface de composition graphique est d'utiliser une table de traduction directe (5I) à la quelle il suffit d'adresser le code du caractère à écrire pour obtenir simultanément la traduction vers le système d'impression (57) et les indications de traitement comme la position relative (haute pour un "b", basse pour un "p" par exemple), taille finale du caractère, nombre de surfaces de composition, couleurs etc.... commandant directement le bloc de commandes auxiliaires (58) sous le contrôle prioritaire du microprocesseur (50), à partir de ces informations les blocs de balayage (56,59) sont commandés jusqu'à la coïncidence de position avec le bloc de synchronisation (55), une fois la position atteinte le microprocesseur (50) synchronise l'impression de chaque surface à l'aide de son programme de calcul et des données fournies lors de la traduction précèdente par le bloc (5I), cette traduction se fesant surface par surface.

La fourniture des codes de caractère à écrire par le système principal se fait en accès direct grâce à une interruption prioritaire (62) permettant de déconnecter instantanément le microprocesseur (50) en branchant les bus de données et d'adresses grâce au bloc de commutation électronique (53) (confondus dans la figure 29 pour des raisons évidentes de clarté), les commandes de contrôle se fesant par l'intermédiaire du bloc (6I) tout l'interface de composition devient directement accessible pour une écriture prioritaire simplifiée, aussi bien dans la mémoire vive de stockage (52) que vers le bloc de traduction directe (5I) grâce aux décodeurs d'adresses (54).

L'application particulière et non limitative qui suit est donnée pour faciliter la compréhension et les explications du fonctionnement de cet interface de composition graphique dans le cas d'utilisation d'une imprimante classique à matrice de 7 points de haut par caractère, dans le cas d'utilisation d'une ligne d'écriture continue comme un jet d'encre sur papier ou d'électrons sur écran vidéo par exemple, chaque traduction correspondrait aux coordonnées d'un point de passage de la ligne et le principe resterait le même, la courbe étant tracée par interpolation entre deux points de passage successifs simulerait parfaitement l'écriture manuscrite naturelle.

Le problème rencontré dans une décomposition par points est la discontinuité diagonale (figure 27) pour y remédier on décompose chaque caractère en plusieurs surfaces de points (ou passages) qui vont se chevauchées avec un léger décalage de façon à parfaire le profil du caractère (figure 28), ce qui permets avec seulement deux passages de composer la figure 22 avec une tête d'impression normale (7 points alignés en parallèles), l'un se fesant de droite à gauche au retour l'autre de gauche à droite à l'aller pour conserver le même temps apparent d'écriture, le passage à la ligne suivante se fesant àprès le retour en position initiale et non pendant comme actuellement pour économiser génralement un second moteur d'entrainement.

Le changement du format d'écriture peut alors se faire sans changer la tête d'impression (cas de la machine à écrire conventionnelle minuscules et majuscules) en effectuant plusieurs passages parallèles avec recouvrement (figure 23, avec seulement 2 passages) ou sans (figure 24), la figure 26 représente les figures 22,23,24,25 à l'échelle réelle unitaire (I/I).

Un tel fonctionnement est très facile à obtenir en utilisant la traduction tabulaire synchronisée sur la vitesse de défilement du papier, le bloc de traduction (5I) pouvant se composer simplement d'une mémoire morte de I6 Bits parallèles actionnant les diverses commandes d'écriture.

0089250

Les possibilités d'un tel interface de composition graphique dépendent des capacités de mémoire vive (52) et de traduction (51) avec 64.000 adresses par bloc à l'aide d'un microprocesseur 8 Bits par exemple (avec adressage indirect) le système principal pourrait entrer directement et sans ralentissement 64.000 caráctères soit environ 30 pages standard 21 x 29,7 en se libèrant totalement du contrôle et des commandes d'écriture, quand au bloc de traduction (51) avec 64.000 adresses 8 ou 16 Bits suivant le nombre de commandes annexes, on peut disposer de 4.000 surfaces élémentaires comme celles de l'exemple de la figure 25 (7x16 points) permettant de très nombreux styles d'écriture différents (majuscules, minuscules, écriture droite ou inclinée, manuscrite ou classique, fantaisie comme les lettres gothiques polychromes etc.....) toutes immédiatement disponibles sans aucune modification mécanique comme actuellement permettant la création d'une machine à écrire universelle, par exemple avec une touche spécifique par style d'écriture.

0089250

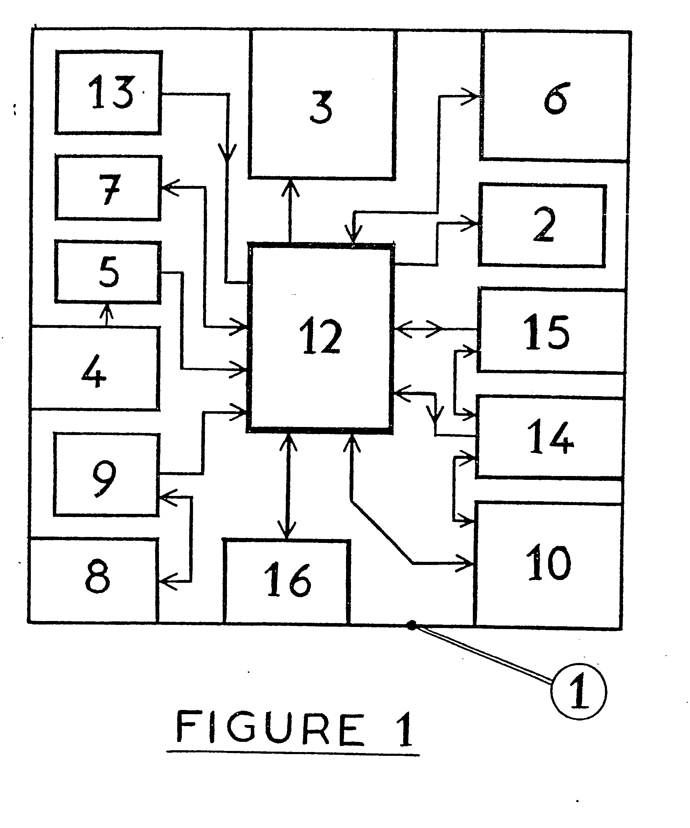

1°)   Dispositif électronique et informatique de traitement de données et de textes (figures 1 et 2) caractérisé par son très important pouvoir de communication directe et par son autonomie totale de fonctionnement informatique, possédant en un seul ou plusieurs boitiers :

Une mémoire de messages informatiques et/ou oraux en parole humaine non reconstituée sur bande magnétique et/ou optique à scrutation très rapide vis à vis des vitesses classiques de lecture musicale (plus de 10 fois supérieure) grâce au magnétophone spécialisé (15) à commandes entièrement électroniques ;

Un clavier graphique de traduction autonome (4 et 5) permettant de recevoir les ordres directement dans les langues des pays de commercialisation Indo-Européennes, Chamito-Sémitiques, Ouralo-Altaiques, Chinoises, Japonaises, Coréennes ou sous forme de dessins quelconques grâce au procédé de traduction tabulaire synchrone (figure 15) permettant à partir d'un code $X_?$ provenant d'appuis au clavier (4) d'aboutir à sa traduction $Y_?$ par simple comparaison avec la table des codes $X_n$ (41) dont la scrutation est synchronisée par des registres dynamiques (42 et 45) avec l'indexation de la table de traduction $Y_n$ (44), les codes $X_n$ et leurs traductions $Y_n$ étant de nature et de format totalement indépendants rendent cette traduction d'usage général et universel ;

Un système d'impression autonome (3) capable de reproduire grâce à des codes de repérage direct des caractères comme ceux des langues utilisables par le clavier graphique susnommé, grâce à l'utilisation du procédé de reconstruction graphique basé sur la juxtaposition et la superposition de surfaces de base non réduites à un point unique, en un ou plusieurs passages à la manière de l'imprimerie polychrome classique;

Un système de communication informatisée (9) utilisant le secteur alternatif d'alimentation générale de l'appareil (8) comme support de transmission haute fréquence synchronisée sur les alternances du secteur

- 29 -

0089250

de distribution en vue d'une liaison générale avec
d'autres systèmes compatibles sans ligne spécialisée
: particulière ;

Une liaison téléphonique (I4) permettant une
communication informatique classique grâce au circuit
de communication série (I0) et orale en voix humaine
naturelle grâce au magnétophone spécialisé (I5),
l'établissement de la communication et la composition
du numéro du correspondant étant entièrement programmable
à partir du microprocesseur (I2) en déclenchement
automatique, sans aucune intervention humaine ;

Une zone de mémoire vive (7) de simulation pouvant
être totalement interdite en écriture (système et
opérateur) tout en restant lisible en lecture instantanée
grâce à un interrupteur mécanique directement
manoeuvrable en face avant du boitier (I) de l'appareil
pour une mise au point facile de programmes longs ou
complexes ;

Une zone de mémoire figée entièrement programmable
(6) physiquement accessible en face avant du boitier (I),
permettant la programmation directe par l'utilisateur
de tous les types de mémoires utilisables par le système
général, sans périphérique ni carte d'adaptation
supplémentaire ., sous forme de circuits intégrés et/ou
de support magnétique et/ou optique grâce à des supports
de programmation spécialisés classiques protégés contre
une écriture involontaire grâce à des interrupteurs
mécaniques également accessibles en face avant qui
peuvent isoler le signal principal de programmation du
support ainsi protégé .

2°)   Dispositif selon la revendication I°) caractérisé
par la diversité des caractères immédiatement disponibles
pour une écriture personnalisée (autre que les classiques
majuscules et minuscules) sans modification mécanique
ou électronique du système d'impression, permettant
notamment un style de caractères sans discontinuité
entre chaque caractère à l'intérieur d'un même mot,
en écriture droite ou inclinée simulant l'écriture .
humaine classique avec plusieurs tailles possibles, l'écriture pouvant se faire sur une imprimante graphique et/ou sur un écran vidéo, en mono ou polychrome ;

Dans le cas d'une imprimante, les types classiques à matrice de points ou à jet d'encre peuvent être remplacés par un modèle à impact beaucoup plus puissant permettant une impression en relief sur un papier cartonné ou en plastique avec un alphabet classique ou BRAILLE pour les aveugles, ou par un modèle utilisant une projection d'encre continue pour une simulation parfaite d'écriture manuscrite ;

Dans le cas d'un écran vidéo, celui-ci peut servir à la fois de surface de composition graphique avec ou sans agrandissement entre le modèle dessiné et le résultat final, de clavier graphique vidéo pour une commande directe en écriture manuscrite grâce à une fibre optique servant de crayon sur l'écran vidéo associé à une traduction tabulaire.

3°) Dispositif selon la revendication I°) caractérisé par son système de mémorisation sur bande magnétique et/ou optique lui permettant de traiter individuellement à très grande vitesse (plus de 500 mm/S) tous les messages numérotés informatiques et/ou musicaux contenus dans les deux faces d'une cassette standard ou non grâce à une tête multi-pistes occupant toute la largeur de la bande ;

Aucune intervention humaine ou mécanique n'étant obligatoire pour les commandes de lecture/écriture, avant/arrière en petite et grande vitesse ou pour le changement de la piste utilisée (face classique par exemple), ces commandes étant entièrement électroniques et/ou programmables grâce à l'utilisation de deux blocs d'entrainement indépendants (25 et 26 figure I8) utilisables en frein et en moteur dans les deux sens de rotation possible permettant ainsi l'entrainement direct des bobines d'enroulement classiques ou à flasques latéraux (46 figure 6) grâce à des manchons à griffes élastiques (49 figure 7) assurant une transmission globale précise à faible jeu mécanique avec une limitation de couple, jusqu'à des vitesses supérieures à 500 tours par minute en lecture ;

La commande de ces blocs se fesant par un système de gestion électronique autonome permettant la régulation en vitesse réelle grâce à un capteur entrainé en rotation directement par le défilement de la bande (I8 et I9 figure I9) avec une détection de fin de bande optique avant le choc résultant (27), remplaçant les classiques ergots de centrage de la cassette dans le magnétophone par exemple, le changement de piste avec inversion de la rotation pouvant être automatique lors de cette détection rends possible l'utilisation de ce système de mémorisation en magnétophone ou en magnétoscope à très longue autonomie de fonctionnement en lecture et/ou en écriture (au moins deux fois la durée classique sans pistes supplémentaires en stéréo ou quatre fois en mono), permettant notamment de sélectionner une partie précise dans la cassette (une chanson parmis 4 heure de musique par exemple) grâce à un interface clavier ou autre.

4°) Dispositif selon l'une quelconque des revendications précédentes caractérisé par son utilisation en répondeur téléphonique personnalisé et programmable permettant notamment de laisser et/ou de recevoir des messages particuliers spécifiques à un correspondant privilègié reconnu par le système de gestion automatique grâce à un signal émis sur le réseau téléphonique par un émetteur de fréquence codée classique, rendant ainsi possible un traitement de messages confidentiels en plus du fonctionnement classique en répondeur téléphonique avec une durée de messages (réception et émission) limitée que par la longueur et le nombre de pistes de la bande (ou des bandes) utilisable(s) par le système de gestion, par exemple 4 heures avec une 2x60 minutes classique sur 4 pistes utiles, l'enregistrement se fesant avec des données supplémentaires grâce à un clavier et/ou par un système informatique extérieur indiquant le nom ou le numéro du correspondant, le traitement à effectuer en cas de réception pouvant aller jusqu'à la retransmission de messages parlés et/ou informatiques à un autre numéro provisoire (résidence secondaire, hôtel lors d'un déplacement, autre poste etc...) pouvant même varier en fonction de l'heure ou de la date.

5°) Dispositif selon la revendication 3°) caractérisé par l'utilisation de plusieurs systèmes de mémorisation sur bande avec leurs électroniques de gestion permettant la reconstruction orale en voix humaine naturelle à partir d'un texte écrit provenant d'un clavier ou d'un autre système informatique indépendant, la traduction s'effectuant d'abord mot à mot grâce à un dictionnaire oral pré-enregistré par un opérateur humain, d'où chaque mot est extrait pour être recopié sur une ou plusieurs autres bandes mémoires dont la lecture continue reproduira un véritable discours humain naturel grâce à l'utilisation de la ponctuation pour parfaire l'intonation, en modifiant la durée des silences entre chaque mot, la vitesse de lecture lors de l'enregistrement avec une compensation en dérive vers les aïgus ou les graves suivant la différence avec la vitesse normale, et sur le volume sonore pendant la traduction.

6°) Dispositif selon l'une quelconque des revendications précédentes caractérisé par l'utilisation d'un clavier graphique de traduction universel autonome composé de deux parties distinctes, d'une part le clavier graphique proprement dit, de l'autre le système électronique permettant une traduction tabulaire entièrement ↲ programmable de la touche ou de la série de touches appuyées ;

Le clavier graphique étant composé d'un classique clavier ultra-plat à dômes métalliques et/ou en élastomère comportant un nombre important de contacts électriques répartis sur toute la surface utile du clavier de manière quelconque régulière ou non, recouvert d'une sérigraphie directe ou par l'intermédiaire d'un film papier ou plastique auto-collant ou amovible représentant un moyen de guidage lors du fonctionnement en surface à dessiner grâce auquel il sera facile de diriger l'écriture effectuée avec le doigt ou un stylet suivant la précision souhaitée pour le dessin, cette sérigraphie pouvant avoir ou non une signification particulière comme la figuration de touches conventionnelles de valeur ou de fonction en nombre au plus égal au nombre de contacts électriques réels du clavier de base ;

Le principe de fonctionnement du système électronique est basé sur la traduction tabulaire du code de la touche appuyée résultant d'une exploration matricielle classique (avec ou sans circuit intégré de gestion automatique synchronisé avec l'affichage), à partir de ce code $X$ la traduction $Y$ se fesant par comparaison successives avec les codes $X_n$ disponibles dans une table de référence (4I figure I5) par l'intermédiaire d'un index dynamique d'exploration (42), cette exploration étant synchronisée grâce à un autre index dynamique (45) totalement indépendant explorant la table des traductions $Y_n$ correspondantes aux codes $X_n$, la nature et le format des codes à traduire $X_n$ et de leurs traductions respectives $Y_n$ devenant ainsi totalement indépendants ( code informatique de repèrage $X$ et le message musical $Y$ par exemple), cette traduction étant dite universelle car chaque code $X$ peut avoir plusieurs traductions possibles par simple modification du registre d'exploration 45, chaque traductions $Y$ plusieurs codes possibles par modification de l'index 42 et la traduction pouvant être réversible ou non suivant le le mode d'exploration utilisé, l'index 43 servant uniquement de butée d'exploration au cas où le code $X_?$ serait inconnu dans la table considérée ;

Cette traduction tabulaire synchrone associée au clavier graphique (ou non dans le cas d'un code direct informatique quelconque) permets l'utilisation de toutes les langues et codes possibles et imaginables aussi bien à partir d'un alphabet classique où chaque caractère peut correspondre à une touche unique (Grec ou Russe par exemple) qu'à partir de dessins possèdant leurs propres

significations (caractères Chinois ou Japonais par exemple) cette traduction pouvant se faire dans une langue quelconque, humaine oralement grâce à un ou plusieurs magnétophones et/ou par écrit grâce au système d'écriture universelle et/ou directement en code informatique spécifique ou non à un système donné, la traduction pouvant se faire à partir d'un ou plusieurs caractères résultants d'un ou plusieurs appuis (contacts appuyés successivement lors de la composition graphique d'un caractère complexe par exemple).

7°) Dispositif selon l'une quelconque des revendications précédentes caractèrisé par son utilisation en contrôleur autonome à distance sans liaison particulière ou spécifique avec le ou les système(s) contrôlé(s), permettant une surveillance automatique et continue des systèmes reliés entre eux par le réseau général de distribution alternatif (E.D.F par exemple) et/ou téléphonique internes et/ou externes à l'entreprise utilisatrice ;

Cette surveillance consistant à émettre un signal informatique codé en haute fréquence durant un temps $T_2$ bien défini (figure 20) après une temporisation $T_I$ déclenchée lors du passage à zéro de la tension secteur alternatif (48) et à en attendre la réponse de confirmation venant de l'appareil testé, la désignation de l'appareil étant donné par $T_I$ et par le contenu émis durant $T_2$, cette transmission pouvant ou non contenir des informations particulières en vue d'un traitement par le contrôleur et/ou par l'appareil ainsi testé (ordres de correction ou des relevés de mesures par exemple), cette réponse se fesant après un délai précis $T_3$ à partir de la fin d'émission ($T_2$) dépendant uniquement de l'appareil testé par programmation, une analyse plus poussée pouvant consister en un véritable dialogue entre les appareils, toutes les mesures de temps sont faites grâce à des quartzs à l'émission comme à la réception et assurent ainsi une grande fidélité dans la transmission ;

En cas de confirmation incorrecte ou absente durant $T_3$ et $T_4$, le contrôleur autonome pouvant recommencer

le contrôle durant un temps programmable avant de déclencher la procèdure d'alerte, soit oralement grâce à un magnétophone et/ou par écrit grâce à une imprimante, localement et/ou à distance grâce à l'interface téléphone, ce qui permets un contrôle précis et personnalisable par l'utilisateur suivant ses besoins.

0089250

# FIGURE 1

0089250

# FIGURE 2

# FIGURE 3 — 3/I2 0089250

FIGURE 3

FIGURE 4

COUPE DD

47

20

46

**FIGURE 5**     **FIGURE 6**

(échelle:2)

D          D

**SECTION CC**          **VUE BB**

(échelle:2)

B →          → C

49

B →          → C

**FIGURE 7**

FIGURE 8

FIGURE 9

FIGURE 10

FIGURE 11

× 4

FIGURE 12

FIGURE 13

**FIGURE 15**

(rappel)
(figure 13)

**FIGURE 14**

0089250

## FİGURE 16

## FİGURE 17

## FİGURE 18

0089250

**49**

**46**

**46**

**20**

**47**

121

21

18

19

27

Δf

Δf

Δf

FIGURE 19

u

**48**

temps

FIGURE 20

H.F

$T_2$

$T_1$

$T_3$

$T_4$

temps

| $Y_{n-2}$ | $X_{n-1}$ | $Y_{n-1}$ | $X_n$ | $Y_n$ | $X_{n+1}$ | $Y_{n+1}$ |

FIGURE 21

FIGURE 22

échelle
générale:

$10/1$

FIGURE 23

FIGURE 24

**FIGURE 25**

**FIGURE 26**

**(échelle 1)**

**FIGURE 27**

**FIGURE 28**

0089250

FIGURE 29

0089250

RAPPORT DE RECHERCHE EUROPEENNE

Office européen
des brevets

EP    83 40 0250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | IBM TECHNICAL DISCLOSURE BULLETIN, vol. 5, no. 11, avril 1963, pages 38-39, New York, USA W.C. DERSCH: "Tape editing system" * En entier * | 1 | G 06 F    3/16<br>G 06 F   15/20 |
| A | GB-A-2 074 354  (SHARP KABUSHIKI KAISHA) * résumé; figures 2,4a,4b,4c; revendication 1 * | 1 | |
| A | PATENTS ABSTRACTS OF JAPAN, vol. 5, no. 100, 27 juin 1981, page 48 P 68 & JP - A - 56 42835 (SHINSHIYUU SEIKI  K.K.)  21-04-1981  * En entier * | 1 | |
| A | DE-A-2 507 603  (CANON K.K.) * Figures 2,3,6,24 * | 1 | |
| A | US-A-4 092 599  (YEE et al.) * Résumé; colonne 1, lignes 5-13 * | 1 | |
| A | IBM TECHNICAL DISCLOSURE BULLETIN, vol. 23, no. 9, février 1981, pages 4006-4008, New York, USA C.H. SEDERHOLM et al.: "Intelligent telephone" * En entier * | 1 | |

**DOMAINES TECHNIQUES RECHERCHES (Int. Cl. ³)**

G 06 F
G 09 B
H 04 B

-/-

Le présent rapport de recherche a été établi pour toutes les revendications

| Lieu de la recherche<br>LA HAYE | Date d'achèvement de la recherche<br>19-05-1983 | Examinateur<br>BECKER K.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

| Catégorie | Citation du document avec indication, en cas de besoin, des parties pertinentes | Revendication concernée | CLASSEMENT DE LA DEMANDE (Int. Cl. ³) |
|---|---|---|---|
| **DOCUMENTS CONSIDERES COMME PERTINENTS** | | | Page  2 |
| A | DE-A-2 339 154  (INSTITUT FÜR ENERGETIK) <br> * Figure; revendication * <br><br> ----- | 1 | |
| | | | **DOMAINES TECHNIQUES RECHERCHES (Int. Cl. ³)** |

Le présent rapport de recherche a été établi pour toutes les revendications

| Lieu de la recherche<br>LA HAYE | Date d'achèvement de la recherche<br>19-05-1983 | Examinateur<br>BECKER K.H. |
|---|---|---|